Europäisches Patentamt

European Patent Office

Office européen des brevets

(11) Veröffentlichungsnummer: **0 397 990**
**A1**

## (12) EUROPÄISCHE PATENTANMELDUNG

(21) Anmeldenummer: 90105327.2

(22) Anmeldetag: 21.03.90

(51) Int. Cl.⁵: **F16D 25/12, F16D 25/0638, F16D 25/14**

(30) Priorität: 10.05.89 DE 3915264

(43) Veröffentlichungstag der Anmeldung:
22.11.90 Patentblatt 90/47

(84) Benannte Vertragsstaaten:
AT DE FR GB IT NL

(71) Anmelder: Xaver Fendt & Co.
Johann-Georg-Fendt-Strasse 4
D-8952 Marktoberdorf(DE)

(72) Erfinder: Reisch, Johann
Saliterstrasse 90
D-8952 Marktoberdorf(DE)
Erfinder: Horsak, Erich
Korberweg 22
D-8952 Marktoberdorf(DE)

(54) Steuereinrichtung für die Zufuhr von Schmier- bzw. Kühlöl zu einer druckmittelbetätigten Reibungslamellenkupplung in Kraftfahrzeugen.

(57) Bekannte Steuereinrichtungen mit einem Steuer-element für die Versorgung der Reibungslamellen einer Lamellenkupplung mit Schmier- bzw. Kühlöl nur im eingerückten Zustand der Kupplung sind bis-her nicht in der Lage, den Schmierölstrom so schnell aufzubauen, daß die Reibungslamellen beim Einrücken der Kupplung bereits benetzt werden, be-vor sie gegenseitigen Reibungskontakt erhalten.

Um daraus resultierenden Lamellenverschleiß zu vermeiden, ist das Steuerelement ein vom Kupplungskolben (16) unabhängiger, bei Beaufschlagung mit dem Druckmitteldruck gegen die Kraft einer Feder (30) verschiebbarer Steuerschieber (28), wobei die Feder (30) derart weich ist, daß der Steuerschieber (28) die Schmier- bzw. Kühlölleitung (19,20,29,21,22,23) bereits vollständig freigegeben hat, bevor die Lamellen (10,12) miteinander in Ein-griff kommen.

EP 0 397 990 A1

## Steuereinrichtung für die Zufuhr von Schier- bzw. Kühlöl zu einer druckmittelbetätigten Reibungslamellenkupplung in Kraftfahrzeugen

Die Erfindung betrifft eine Steuereinrichtung für die Zufuhr von Schmier- bzw. Kühlöl zu einer druckmittelbetätigten Reibungslamellenkupplung in Kraftfahrzeugen, mit einem Steuerelement, das unter dem Einfluß eines den Kupplungskolben beaufschlagenden, das Einrücken der Reibungslamellenkupplung bewirkenden Druckmitteldruckes im Sinne einer Freigabe der Schmier- bzw. Kühlölleitung zu den Kupplungslamellen verschiebbar ist.

Eine derart beschreibbare Steuereinrichtung ist bereits bekannt, kann jedoch druckschriftlich nicht belegt werden. Bei der bekannten Steuereinrichtung erfolgt die Zufuhr des Schmier-bzw. Kühlöls zu den Lamellen der Reibungslamellenkupplung über eine Bohrung in der Abtriebswelle der Reibungslamellenkupplung. Die Austrittsöffnung der Bohrung befindet sich im Bereich der Kupplungslamellen und wird durch einen abgedichtet auf der Abtriebswelle geführten Ringansatz des Kupplungskolbens in Abhängigkeit vom Schaltzustand der Lamellenkupplung geöffnet oder geschlossen. Geöffnet ist die Austrittsöffnung, wenn der Kupplungskolben im Einrücksinn verschoben ist und eine radiale Durchgangsöffnung im Ringansatz sich mit der Austrittsöffnung deckt.

Nachteilig bei der bekannten Ausführung ist, daß zur Verhinderung eines unerwünschten Leckölaustritts bei nicht eingerückter Lamellenkupplung die radiale Durchgangsöffnung im Ringansatz einen möglichst großen Abstand von der Austrittsöffnung der Bohrung in der Ausgangswelle aufweisen muß. Da der Betätigungsweg des Kupplungskolbens in etwa der gleichen Größenordnung liegt, wird die Zuleitung für das Schmieröl erst dann oder wenig früher vollständig geöffnet, wenn die Kupplungslamellen bereits drehmomentübertragend aneinanderliegen. Eine ausreichende Benetzung der Lamellenoberflächen mit Schmier- bzw. Kühlöl vor allem bereits zu Beginn der Drehmomentübertragung, kann daher nicht angenommen werden. Da unter diesen Umständen mit einem unkontrollierbaren Lamellenverschleiß zu rechnen ist, kann die voraussichtliche Lebensdauer der Kupplungslamellen nicht mit der gewünschten Genauigkeit vorausgesagt werden.

Ausgehend von dem beschriebenen Stand der Technik besteht die Aufgabe der vorliegenden Erfindung darin, eine Steuereinrichtung der eingangs beschriebenen Gattung für die Zufuhr von Schmier-bzw. Kühlöl zu einer druckmittelbetätigten Reibungslamellenkupplung zu schaffen, bei der noch vor dem Anlegen der Kupplungslamellen aneinander der volle Schmier-bzw. Kühlöldurchsatz gegeben ist.

Die im Kennzeichen des Hauptanspruches beschriebenen Merkmale dienen dabei der Lösung dieser Aufgabe.

Die Erfindung ermöglicht es, das Steuerelement, im vorliegenden Fall also den Steuerschieber, beim Einrücken mit im Vergleich zu der des Kupplungskolbens bedeutend höheren Geschwindigkeit zu verschieben, so daß die Zuleitung für das Schmier- bzw. Kühlöl bereits vor dem Aufeinandertreffen der Kupplungslamellen vollständig geöffnet ist. Damit werden die Kupplungslamellen rechtzeitig vor ihrem Aufeinandertreffen allseitig mit Schmier-bzw. Kühlöl umspült, was nicht nur einen geringen Lamellenverschleiß, sondern auch ein weiches Einkuppeln bewirkt. Ferner kann ein unerwünschter Zutritt von Lecköl in den Lamellenbereich unterbunden werden, ohne zu diesem Zweck das Lüftspiel des Kupplungskolbens vergrößern zu müssen.

Eine weitere vorteilhafte Ausgestaltung der Erfindung ist dem Unteranspruch zu entnehmen, wodurch wegen des vor dem Steuerschieber anstehenden Schmieröldruckes das Traglager der Ausgangswelle in einfacher Weise mit Schmieröl belieferbar und eine bequeme Zugänglichkeit zum Steuerschieber im Falle eines Versagens gegeben ist.

Im folgenden wird die erfindungsgemäße Steuereinrichtung anhand einer Zeichnung näher erläutert.

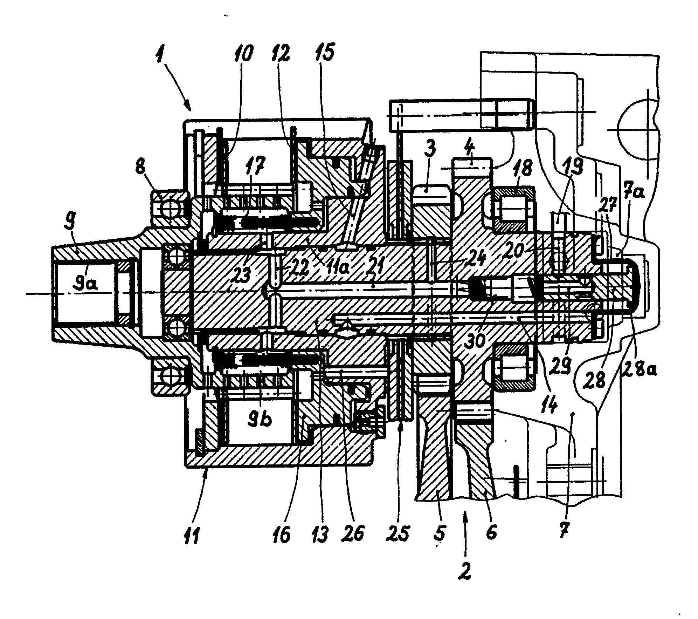

In der Zeichnung ist die Erfindung am Beispiel des Zapfwellenantriebes eines Ackerschleppers beschrieben. Einer allgemein mit 1 angedeuteten Reibungslamellenkupplung ist ein mit 2 bezeichnetes zweistufiges Schaltgetriebe nachgeschaltet, über dessen von den treibenden Zahnrädern 3,4 angetriebenen Zahnräder 5,6 die nicht gezeigte Zapfwelle antreibbar ist.

Sowohl die Reibungslamellenkupplung 1 als auch das Schaltgetriebe 2 ist in einem Getriebegehäuse untergebracht, von dem lediglich ein das Getriebegehäuse schaltgetriebeseitig abschließender Deckel 7 gezeigt ist. Im entgegengesetzten Bereich des Getriebegehäuses ist über ein Wälzlager 8 die Eingangswelle 9 der Kupplung 1 gelagert. Während der in der Zeichnung linke Endbereich der Eingangswelle 9 mit einer Innenkeilverzahnung 9a für die drehfeste Verbindung mit einer antreibenden Welle versehen ist, ist deren rechter Endbereich trommelförmig ausgebildet, wobei die zylindrische Trommel von einer Vielzahl Bohrungen 9b durchbrochen ist. Außen trägt die Trommel in bekannter Weise eine Vielzahl drehfester, jedoch axial verschiebbarer Innenlamellen 10, die mit in gleicher Weise in einem trommelförmigen Bereich einer Kupplungsglocke 11 gelagerten Außenlamellen 12 zusammenarbeiten. Die Kupplungsglocke 11 ist mit einem Ringansatz 11a über eine Keilverzahnung drehfest mit der in der Eingangswelle 9 gelagerten Ausgangswelle 13 der Kupplung 1 verbunden. Innerhalb der Kupplungsglocke 11 ist ein über eine Druckmittelleitung (Bohrung 14,15) mit Drucköl beaufschlagbarer Kupplungskolben 16 gegen die Kraft von Federn 17 verschiebbar auf dem Ringansatz 11a geführt, um in druckbeaufschlagtem Zustand die Kupplungslamellen 10,12 unter Drehmomentübertragung zusammenzupressen. Die Druckmitteleinspeisung in die Bohrung 14 erfolgt in einer von dem Gehäusedeckel 7 und der Stirnseite der Ausgangswelle 13 gebildeten Kammer 7a, die ihrerseits über eine nicht gezeigte Leitung mit einem außerhalb des Getriebegehäuses angeordneten Kupplungsschaltventil für die Ansteuerung der Kupplung 1 in Verbindung steht.

Die Ausgangswelle 13 ist jenseits der beiden auf ihr gelagerten Zahnräder 3,4 des Schaltgetriebes 2 über ein Rollenlager 18 im Getriebegehäuse gelagert, durch das eine Schmier- bzw. Kühlöl führende Bohrung 19 herangeführt ist. Die Schmierung des Rollenlagers 18 erfolgt über gezielt herangeführtes Lecköl aus dem Schmierkreis. Hierfür ist im Bereich zwischen der Bohrung 19 und dem Rollenlager 18 auf eine Abdichtung des Spaltes zwischen dem Deckel 7 und der Ausgangswelle 13 verzichtet worden. Die Weiterleitung des Schmier- bzw. Kühlöls erfolgt durch radiale und axiale Bohrungen 20,21,22,23 in der Ausgangswelle 13 und dem Ringansatz 11a der Kupplungsglocke 11 in den von der Trommel der Eingangswelle 9 gebildeten Zylinderraum. Von dort fließt es über die Bohrungen 9b in den Bereich der Kupplungslamellen 10,12 ab. Eine von der Bohrung 21 abzweigende Bohrung 24 versorgt außerdem eine Bremse 25, die die Ausgangswelle 13 bei ausgerückter Kupplung 1 über mehrere vom Kupplungskolben 16 verschiebbare Bolzen 26 festsetzt, um ein leichtes Schalten des Schaltgetriebes 2 zu gewährleisten.

An der die Kammer 7a mitbildenden Stirnseite ist an der Ausgangswelle 13 eine hutförmige Lasche 27 befestigt, die als Anschlag für einen Steuerschieber 28 wirkt, der in die dort im Durchmesser vergrößerte Bohrung 21 eingesetzt ist und in seiner in der Zeichnung rechten Endstellung, in der er an der Lasche 27 anliegt, den Durchfluß von Schmier- bzw. Kühlöl von der Bohrung 20 in die Bohrung 21 unterbindet, während er in seiner linken Position, in der er mit seinem Kopf 28a an der Stirnwand der Ausgangswelle 13 dichtend anliegt, die beiden Bohrungen 20,21 über eine eigene Bohrung 29 miteinander verbindet. Bei ausgerückter Kupplung, d.h. bei druckloser Kammer 7a ist der Steuerschieber 28 unter der Kraft einer Feder 30 in seine rechte Endstellung geschoben, so daß den Kupplungslamellen 10,12 keinerlei Schmier- bzw. Kühlöl zugeführt wird. In dieser Stellung des Steuerschiebers 28 ist der Abstand der Mündung des radialen Bereiches der Bohrung 29 von der Mündung der Bohrung 20 so groß, daß keinerlei Lecköl auftritt.

Erfolgt eine Ansteuerung des Kupplungsschaltventils im Sinne eines Einrückens der Kupplung 1, so baut sich in der Kammer 7a und schließlich über die Leitungen 14,15 vor dem Kupplungskolben 16 ein Druck auf, der den Kupplungskolben 16 gegen die Kraft der Feder 17 verschiebt und dabei die Kupplungslamellen 10,12 drehmomentübertragend zusammenpreßt. Die Kupplung gemäß dem Ausführungsbeispiel ist dabei so ausgelegt, daß für ein Verschieben des Kupplungskolbens 16 ein Mindestdruck von 3 bar erforderlich ist und im Moment des Anlegens der Kupplungslamellen 10,12 ein Druck von etwa 5 bar herrscht, der im weiteren Verlauf bis zur Übertragung des vollen Drehmoments auf 18 bar Betriebsdruck ansteigt. Damit die Kupplungslamellen 10,12 noch vor ihrem Aufeinandertreffen, bis zu dem nur einige wenige Millisekunden vergehen, mit ausreichender Schmier- bzw. Kühlölmenge beliefert werden, ist die den Steuerschieber 28 belastende Feder 30 sehr weich ausgelegt. Auf diese Weise gelingt es, den Steuerschieber 28 bereits bei etwa 2 bar, d.h. einem wesentlich niedrigeren Druck als der Kupplungskolben 16 benötigt, zu bewegen und auch erheblich schneller als diesen seine Position erreichen zu lassen, in der der Schmier- bzw. Kühlölfluß zur Kupplung 1 freigegeben wird.

## Ansprüche

1. Steuereinrichtung für die Zufuhr von Schmier- bzw. Kühlöl zu einer druckmittelbetätigten Reibungslamellenkupplung (1) in Kraftfahrzeugen, mit einem Steuerelement, das unter dem Einfluß eines den Kupplungskolben (16) beaufschlagenden, das Einrücken der Reibungslamellenkupplung (1) bewirkenden Druckmitteldrucks im Sinne einer Freigabe der Schmier- bzw. Kühlölleitung zu den Kupplungslamellen (10,12) verschiebbar ist,
**dadurch gekennzeichnet,**
daß das Steuerelement ein vom Kupplungskolben (16) unabhängiger, bei Beaufschlagung mit dem Druckmitteldruck gegen die Kraft einer Feder (30) verschiebbarer Steuerschieber (28) ist, wobei die Feder (30) derart weich ist, daß der Steuerschieber (28) die Schmier- bzw. Kühlölleitung (19,20,29,21,22,23) bereits vollständig freigegeben hat, bevor die Lamellen (10,12) miteinander in Eingriff kommen.

2. Steuereinrichtung nach Anspruch 1,
**dadurch gekennzeichnet,**
daß der Steuerschieber (28) in der Ausgangswelle (13) der Reibungslamellenkupplung (1) geführt ist.

FE 1484

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 106 594  (DEERE)<br>* Das ganze Dokument *<br>--- | 1,2 | F 16 D   25/12<br>F 16 D   25/0638<br>F 16 D   25/14 |
| X | US-A-3 301 367  (YOKEL)<br>* Das ganze Dokument *<br>--- | 1,2 | |
| A | DE-B-1 273 920  (TWIN DISC)<br>* Das ganze Dokument *<br>--- | 2 | |
| A | EP-A-0 143 898  (Z.F.)<br>----- | | |

RECHERCHIERTE
SACHGEBIETE (Int. Cl.5)

F 16 D   25/00

Der vorliegende Recherchenbericht wurde für alle Patentansprüche erstellt

| Recherchenort | Abschlußdatum der Recherche | Prüfer |
|---|---|---|
| DEN HAAG | 12-09-1990 | BALDWIN D.R. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
    Dokument

EPO FORM 1503 03.82 (P0403)